(19) Europäisches Patentamt
European Patent Office
Office européen des brevets

(11) Veröffentlichungsnummer: **0 054 804**
**A1**

(12) # EUROPÄISCHE PATENTANMELDUNG

(21) Anmeldenummer: **81110175.7**

(22) Anmeldetag: **05.12.81**

(51) Int. Cl.³: **C 08 G 65/32,** C 07 F 9/165, C 10 M 3/42

(30) Priorität: **19.12.80 DE 3048087**

(43) Veröffentlichungstag der Anmeldung: **30.06.82**
**Patentblatt 82/26**

(84) Benannte Vertragsstaaten: **BE DE FR GB**

(71) Anmelder: **BAYER AG, Zentralbereich Patente, Marken und Lizenzen, D-5090 Leverkusen 1, Bayerwerk (DE)**

(72) Erfinder: **Hentschel, Karl-Heinz, Dr., Heckschenstrasse 89, D-4150 Krefeld 10 (DE)**
Erfinder: **Kussi, Siegfried, Brandenburger Strasse 43, D-5090 Leverkusen 1 (DE)**

(54) **Zinkkomplexe, ein Verfahren zu ihrer Herstellung und ihre Verwendung als Verschleissschutz-Additive.**

(57) Neue Zinkkomplexe der Formel

$$\left\{[R^1O-(CH_2-\underset{\underset{R^2}{|}}{C}H-O)_n]_m[R^3-O]_{(2-m)}\overset{\overset{S}{\|}}{P}-S\right\}_2 Zn$$

worin

$R^1$ und $R^3$ gleich oder verschieden sind und Alkyl, Alkenyl, Fettsäureamidyl, Acyl, Cycloalkyl, Aryl, Aralkyl oder Alkaryl bedeuten,

$R^2$ Niederalkyl bedeutet,

m eine reelle Zahl von 0,5 bis 2 bedeutet und

n eine reelle Zahl von 2 bis 100 bedeutet

können durch Umsetzung eines Polyäthermonoalkohols mit Phosphordecasulfit und danach mit Zink bzw. einer Zinkverbindung hergestellt werden. Die neuen Zinkkomplexe können als Verschleißschutz-Additive, insbesondere in HS–C–Fluiden, verwendet werden.

EP 0 054 804 A1

BAYER AKTIENGESELLSCHAFT 5090 Leverkusen, Bayerwerk

Zentralbereich
Patente, Marken und Lizenzen Mn/bc/kl-c

# Zinkkomplexe, ein Verfahren zu ihrer Herstellung und ihre Verwendung als Verschleißschutz-Additive

Die Erfindung betrifft neue Zinkkomplexe, ein Verfahren zu ihrer Herstellung und ihre Verwendung als Verschleißschutz-Additive, insbesondere in wäßrigen Hydraulikflüssigkeiten.

Nach dem 5. Luxemburger Bericht vom 15. November 1974 sind Hydraulikflüssigkeiten vom Typ HS-C bekannt. Unter HS-C-Flüssigkeiten versteht man wäßrige Polymer-Lösungen mit mindestens 35 % Wasser, die bei Betriebstemperaturen zwischen -20 und +60°C für die hydraulische Kraftübertragung und Steuerung verwendet werden können. Bei den wasserlöslichen Polymeren handelt es sich im allgemeinen um Verbindungen mit einem mittleren Molekulargewicht von 350 bis 200 000 wie Polyalkylenglykole, insbesondere Polyethylen- und Polypropylenglykole, Polyalkylenglykolester und Polyalkylenglykolamide.

HS-C Flüssigkeiten werden im allgemeinen für die hydraulische Kraftübertragung und Steuerung von Pumpen, Stanzen und Pressen im Bergbau, in Trocknern und Öfen

der keramischen Industrie, in Heißwalzanlagen, in Öffnungs- und Verschlußvorrichtungen für Heiz- und Schmelzöfen, in Spritzgußapparaturen und in Förderanlagen und Kränen für Heißzonen verwendet. Bei Verwendung der HS-C Fluide tritt sehr leicht vorzeitig ein Verschleiß an den Gleitpaarungen des Hydrauliksystems ein. Der Zusatz handelsüblicher Verschleißschutz-Additive, die sich bei der Additivierung von Mineralölen bewährt haben, beispielsweise Zinkdialkyl-dithiophosphate, ist nicht befriedigend möglich, weil sich diese nicht oder nur schlecht in den wäßrigen Systemen lösen.

Es wurden neue Zinkkomplexe der allgemeinen Formel

$$\left\{ \left[ R^1O-(CH_2-\underset{R^2}{\underset{|}{C}}H-O)_n \right]_m \left[ R^3-O \right]_{(2-m)} \overset{S}{\overset{\|}{P}}-S \right\}_2 Zn \qquad (I),$$

worin

$R^1$ und $R^3$ gleich oder verschieden sind und Alkyl, Alkenyl, Fettsäureamidyl, Acyl, Cycloalkyl, Aryl, Aralkyl oder Alkaryl bedeuten,

$R^2$ Niederalkyl bedeutet,

m eine reelle Zahl von 0,5 bis 2 bedeutet, und

n eine reelle Zahl von 2 bis 100 bedeutet,

gefunden.

Die neuen Zinkkomplexe lösen sich klar in den HS-C Fluiden und in Wasser und haben eine sehr gute Wirkung zur Verhinderung des Verschleißes, beispielsweise in Hydrauliksystemen.

Alkyl kann erfindungsgemäß ein geradkettiger oder verzweigter Kohlenwasserstoffrest mit 1 bis 30, bevorzugt 1 bis 18, Kohlenstoffatomen sein. Beispielsweise seien die folgenden Alkylreste genannt: Methyl, Ethyl, Propyl, iso-Propyl, Butyl, iso-Butyl, Pentyl, iso-Pentyl, Hexyl, Octyl, 2-Ethyl-hexyl, Decyl, Dodecyl, Tridecyl, Tetradecyl, Cetyl, Stearyl und 2-Acryl-decyl.

Bevorzugte Alkylreste sind der Methyl-, Ethyl-, Dodecyl-, Cetyl- und Stearylrest.

Alkenyl kann erfindungsgemäß ein ungesättigter, geradkettiger oder verzweigter Kohlenwasserstoffrest mit 2 bis 30, bevorzugt 3 bis 18, Kohlenstoffatomen sein. Beispielsweise seien die folgenden Alkenylreste genannt: Allyl, But-2-en-1-yl, But-3-en-1-yl, Palmitoleyl und Oleyl.

Bevorzugte Alkenylreste sind der Palmitoleyl- und der Oleylrest.

Fettsäureamidyl kann erfindungsgemäß ein mit einem geradkettigen oder verzweigten Kohlenwasserstoff mit 5 bis 30, bevorzugt 12 bis 22, Kohlenstoffatomen verknüpfter Carbonamidylrest sein. Beispielsweise seien die folgenden Fettsäureamidylreste genannt: 2-Acetamidoethyl, 2-Lauramidoethyl, 2-Stearylamidoethyl, 2-(N-Hydroxyethyl)-acetamido-ethyl, 2-(N-Hydroxyethyl)-lauramido-ethyl, 2-(N-Hydroxyethyl)-stearylamido-ethyl. Bevorzugte Fettsäureamidylreste sind der 2-Stearylamido-ethyl- und der 2-(N-Hydroxyethyl)-stearylamido-Rest.

Acylreste können erfindungsgemäß die Acylreste aliphatischer, cycloaliphatischer oder aromatischer Reste sein. Aliphatische Reste können hierbei erfindungsgemäß 2 bis 30, bevorzugt 2 bis 18, Kohlenstoffatome haben. Cycloaliphatische Reste können hierbei cyclische Kohlenwasserstoffe mit 4 bis 30, bevorzugt 7 bis 18 Kohlenstoffatomen sein. Aromatische Reste können hierbei cyclische aromatische Kohlenwasserstoffe mit 7 bis 30, bevorzugt 7 bis 18, Kohlenstoffatomen sein. Beispielsweise seien die folgenden Acylreste genannt: Acetyl, Butyryl, Capryl, Lauroyl, Palmitoyl, Stearoyl, Cyclohexylcarbonyl, Perhydronaphthylcarbonyl,4-tert.-Butylcyclohexylcarbonyl, 4-Isononyl-cyclohexylcarbonyl, Benzoyl, p-tert.-Butylbenzyl, p-Isononyl-benzoyl.

Bevorzugte Acylreste sind Lauroyl, Myristoyl, Palmitoyl, Stearoyl, Cyclohexylcarboxyl, Benzoyl.

Cycloalkyl kann erfindungsgemäß ein gesättigter mono- oder polycyclischer Kohlenwasserstoff mit 4 bis 30, bevorzugt 6 bis 18, Kohlenstoffatomen sein. Beispielsweise seien die folgenden Cycloalkylreste genannt: Cyclohexyl, Cycloheptyl, Perhydronaphthyl (Decalyl), Perhydroindanyl, Cyclohexyl-cyclohexyl, Perhydrobenzyl, 6-Cyclohexylhexyl.

Bevorzugte Cycloalkylreste sind der Cyclohexyl-, der Decalyl- und der Cyclohexyl-cyclohexylrest.

Aryl kann erfindungsgemäß ein aromatischer Kohlenwasserstoff mit 1 bis 5, bevorzugt 1 bis 3, insbesondere bevorzugt 1 oder 2, Ringen und mit 6 bis 30, bevorzugt von 6 bis 18, Kohlenstoffatomen sein. Beispielsweise seien die folgenden Arylreste genannt:
Phenyl, Naphthyl, Indanyl, Anthracenyl, Phenanthenyl, Biphenylyl, Triphenylyl.

Bevorzugte Arylreste sind Phenyl, Naphthyl und Biphenylyl.

Aralkyl kann erfindungsgemäß ein durch einen Arylrest substituierter Alkylrest sein, wobei der Arylrest 6 bis 14, bevorzugt 6 bis 10, Kohlenstoffatome und der Alkylrest 1 bis 30, bevorzugt 1 bis 12 Kohlenstoffatome haben kann. Beispielsweise seien die folgenden Aralkylreste genannt:
Benzyl, 2-Phenylethyl, Naphthylmethyl, 2-Naphthylethyl, 6-Phenylhexyl.

Bevorzugte Aralkylreste sind Benzyl und 2-Phenylethyl.

Alkaryl kann erfindungsgemäß ein durch einen Alkylrest substituierter Arylrest sein, wobei der Alkylrest 1 bis 30, bevorzugt 1 bis 12, Kohlenstoffatome und der Arylrest 5 bis 14, bevorzugt 6 bis 10, Kohlenstoffatome haben kann. Beispielsweise seien die folgenden Alkarylreste genannt:
Tolyl, Xylyl, Ethylphenyl, p-tert.-Butyl-phenyl, p-iso-Nonyl-phenyl, Methylnaphthyl.

Bevorzugte Alkarylreste sind Tolyl, Xylyl, Ethylphenyl, p-tert.-Butyl-phenyl, p-iso-Nonyl-phenyl.

Niederalkyl kann erfindungsgemäß ein geradkettiger oder verzweigter Kohlenwasserstoffrest mit 1 bis etwa 6 Kohlenstoffatomen sein. Beispielsweise seien Methyl, Ethyl, Propyl, Isopropyl, Butyl, Isobutyl, Pentyl, Isopentyl, Hexyl und Isohexyl genannt. Bevorzugte Niederalkylreste sind Methyl und Ethyl.

Die Zahl m gibt an, durch wieviel Polyetheralkohol-Reste der Phosphor im statistischen Mittel substituiert ist. Für den Fall, daß kein Monoalkohol bei der Herstellung der erfindungsgemäßen neuen Zinkkomplexe eingesetzt wurde, nimmt m den Wert 2 an.

Die Zahl n gibt an, wieviel Ethereinheiten der Polyether enthält.

Bevorzugte erfindungsgemäße Zinkkomplexe sind Verbindungen der Formel

$$\left\{ \left[ R^4O-(CH_2-\underset{R^5}{\underset{|}{CH}}-O)_{n'} \right]_{m'} \left[ R^6-O \right]_{(2-m')} \overset{S}{\overset{\|}{P}}-S \right\}_2 Zn \qquad (II),$$

worin

$R^4$ und $R^6$ gleich oder verschieden sind und Alkyl mit 1 bis 30 Kohlenstoffatomen, Alkenyl mit 2 bis 30 Kohlenstoffatomen, Fettsäureamidyl mit 5 bis 30 Kohlenstoffatomen, Acyl mit 2 bis 30 Kohlenstoffatomen, Mono- oder Polycycloalkyl mit 4 bis 30 Kohlenstoffatomen, Aryl mit 1 bis 5 Ringen und 6 bis 30 Kohlenstoffatomen, Aralkyl mit 6 bis 14 Kohlenstoffatomen im Arylteil und 1 bis 30 Kohlenstoffatomen im Alkylteil oder Alkaryl mit 1 bis 30 Kohlenstoffatomen im Alkylteil und 6 bis 14 Kohlenstoffatomen im Arylteil bedeuten,

$R^5$ Methyl oder Ethyl bedeutet,

m' eine reelle Zahl von 0,8 bis 1,8 bedeutet und

n' eine reelle Zahl von 5 bis 30 bedeutet.

Besonders bevorzugt sind die erfindungsgemäßen Zinkkomplexe der Formel

$$\left\{ \left[ R^7O-(CH_2-\underset{R^5}{CH}-O)_{n'} \right]_{m'} \left[ R^8-O \right]_{(2-m')} \overset{S}{\overset{\|}{P}}-S \right\}_2 Zn \qquad (III),$$

worin

$R^7$ und $R^8$ gleich oder verschieden sind und Alkyl mit 1 bis 18 Kohlenstoffatomen oder Alkenyl mit 3 bis 18 Kohlenstoffatomen bedeuten, und

$R^5$, m' und n' die obengenannte Bedeutung haben.

Beispielsweise seien die folgenden erfindungsgemäßen Zinkkomplexe genannt:

$$\left\{ [Oleyl-O-(C_2H_4O)_{19}]_2 \overset{S}{\overset{\|}{P}}-S \right\}_2 Zn$$

$$\left\{ [Palmitoleyl-O-(C_2H_4O)_{16}]_2 \overset{S}{\overset{\|}{P}}-S \right\}_2 Zn$$

$$\left\{ [Lauryl-O-(C_2H_4O)_{10}] [C_4H_9-OC_2H_4-OC_2H_4-O] \overset{S}{\overset{\|}{P}}-S \right\}_2 Zn$$

Durch längeres Kochen der erfindungsgemäßen Zinkkomplexe in wasserhaltigen Lösungsmitteln kann eine teilweise Verseifung der Phosphor-thion-Gruppe zu einer Phosphoroxo-Gruppe auftreten. Die so erhaltenen Verbindungen verändern die Eigenschaften der erfindungsgemäßen Zinkkomplexe nicht.

Es wurde auch ein Verfahren zur Herstellung der neuen Zinkkomplexe gefunden, das dadurch gekennzeichnet ist, daß man einen Polyethermonoalkohol der Formel

$$R^1O-(CH_2-\underset{R^2}{\underset{|}{C}}H-O)_nH \quad (IV),$$

worin
$R^1$,$R^2$ und n die obengenannte Bedeutung haben,

gegebenenfalls in Gegenwart eines Monoalkohols der Formel

$$R^3-OH \quad (V),$$

worin
$R^3$ die obengenannte Bedeutung hat,

mit Phosphordecasulfid umsetzt, wobei ein Mengenverhältnis der Alkohole zu dem Phosphordekasulfid von 1 zu etwa 1,8 bis 2,2 eingehalten wird, und dann die entstandene O,O-Dialkyl-dithiophosphorsäure mit Zink bzw. einer Zinkverbindung in einem Lösungsmittel umsetzt.

Polyetheralkohole sind an sich bekannt (Ullmann 14, 43 ff, 1963) und können beispielsweise durch Addition von Epoxiden an Verbindungen mit alkoholischen oder phenolischen Hydroxygruppen hergestellt werden.

Bevorzugte Polyetheralkohole sind Verbindungen der Formel

$$R^4\text{-O-}(CH_2\text{-}\underset{R^5}{CH}\text{-O})_{n'}\text{H} \qquad \text{(VI)},$$

worin
$R^4$, $R^5$ und n' die obengenannte Bedeutung haben.

Beispielsweise seien die folgenden Polyetheralkohole genannt: Diethylenglykolmonomethylether, Diethylenglykolmonoethylether, Triethylenglykolmonomethylether, Octaethylenglykolmonobutylether, Emulgatoralkohole vom Typ an ungesättigte Fettalkohole addierter Polyethylenoxide, Phenol, Alkylphenole wie p-Methylphenol.

Bevorzugte Monoalkohole sind Verbindungen der Formel

$$R^6\text{-OH} \qquad \text{(VII)},$$

worin
$R^6$ die obengenannte Bedeutung hat.

Als Monoalkohole für das erfindungsgemäße Verfahren seien beispielsweise genannt: Methanol und Ethanol, Propanol, Isopropanol, Butanol, Isobutanol, Sek.-Butanol, tert.-Butanol, Amylalkohol, Hexanol, Octanol, Isooctanol, Dekanol, Dodekanol, Isotridekanol, Cetylalkohol, Stearylalkohol, Oleylalkohol, Cyclohexanol.

Tetraphosphordekasulfid ist an sich bekannt (Ullmann 13, 566 ff (1962) und 15, 219-222 (1964), sowie in Ullmann 18, 369 ff. (1979)) und kann beispielsweise durch Umsetzung von Phosphor und Schwefel hergestellt werden.

Die Umsetzung der Alkohole mit dem Tetraphosphordekasulfid erfolgt erfindungsgemäß in einem Mengenverhältnis von 1 zu etwa 1,8 bis etwa 2,2, bevorzugt 1:1,9 bis 2,1.

Das erfindungsgemäße Verfahren wird in einem Lösungsmittel durchgeführt, das frei von Hydroxylgruppen ist. Bevorzugt werden Lösungsmittel, die einen Siedepunkt bei 1 bar unter 150°C haben. Beispielsweise seien genannt: Diethylether, Ethylenglykoldimethylether, Diethylenglykoldi-ethylether, Diethylenglykoldiethylether, 1,2-Propylenglykoldimethylether, Ethylenglykolmethylether-monoacetat, Tetrahydrofuran und Dioxan. Bevorzugtes Lösungsmittel ist Tetrahydrofuran.

Das erfindungsgemäße Verfahren wird im allgemeinen im Temperaturbereich von 0 bis 200°C, bevorzugt von 50 bis 120°C, durchgeführt.

Das erfindungsgemäße Verfahren wird im allgemeinen im Druckbereich von 0,1 bis 10 bar, bevorzugt von 0,8 bis 5 bar, durchgeführt.

Zink bzw. Zinkverbindungen für das erfindungsgemäße Verfahren können beispielsweise metallisches Zink, Zinkoxid, Zinkhydroxid, Zinkcarbonat, basisches Zinkcarbonat und ähnliche zur Neutralisation von Säuren geeignete Zinkverbindungen sein.

Das Zink oder die Zinkverbindung liegen im allgemeinen in Form von Pulvern oder Granulaten vor.

Bei der Umsetzung der O,O-Dialkyl-dithiophosphorsäure mit dem Zink oder der Zinkverbindung setzt man pro Mol der O,O-Dialkyl-dithiophosphorsäure im allgemeinen 0,4 bis 0,6, bevorzugt 0,45 bis 0,55, C-Atom Zink (bei Zinkverbindungen Zink in der Zinkverbindung) ein.

Das erfindungsgemäße Verfahren kann beispielsweise wie folgt durchgeführt werden:

Der Polyetheralkohol und der Monoalkohol werden mit Tetraphosphordekasulfid versetzt und bei erhöhter Temperatur unter Durchleiten eines Inertgases wie z.B. Stickstoff solange erhitzt, bis im Abgas kein Schwefelwasserstoff mehr nachweisbar ist. Dann füllt man in der Kälte das Zink oder die Zinkverbindung zu und erhitzt unter Rühren und weiterem Durchleiten eines Inertgases wie z.B. Stickstoff das Gemisch bis es völlig in Lösung gegangen ist. Durch Destillation trennt

man dann den überschüssigen Alkohol ab, und erhält den erfindungsgemäßen Zinkkomplex.

Die neuen Zinkkomplexe haben hervorragende Eigenschaften als Verschleißschutzmittel in HS-C Fluiden. Im allgemeinen werden sie den Fluiden in Mengen von 0,1 bis 20, bevorzugt von 1 bis 5 Gew.-Teilen, bezogen auf 100 Gew.-Teile des HS-C Fluids, eingesetzt.

Außerdem können die erfindungsgemäßen neuen Zinkkomplexe mit Vorteil als Verschleißschutzmittel in wasserlöslichen Kühlschmierstoff-Konzentraten für die spanhebende Metallbearbeitung (Fräsen, Bohren, Schneiden, Stoßen, Sägen usw.) eingesetzt werden. Es ist auch möglich, die neuen Zinkkomplexe in wäßrigen Fluidsystemen, die zum Einsatz in Kraftübertragungssystemen bestimmt sind, und in allen Systemen, in denen mit Hilfe wäßriger Flüssigkeiten Gleitvorgänge begünstigt werden sollen (wie z.B. in Spülflüssigkeiten bei der tertiären Förderung von Erdöl), eingesetzt werden.

Beispiel 1

331,2 g eines Polyethers, der durch Polymerisation von Ethylenoxid in Gegenwart von Oleylalkohol hergestellt wurde und der eine mittlere Zusammensetzung entsprechend 19 Oxyethyleneinheiten pro Oleylalkohol-Endgruppe (Molekulargewicht ca. 1100, HLB 15,1) hat, werden in 75 ml absolutem Dioxan gelöst und in der Kälte 16,7 g $P_4S_{10}$ zugegeben. Dann wird langsam in einer Stunde auf 80°C hochgeheizt und bei dieser Temperatur 150 Minuten gehalten. In 15-minütigen Zeitabständen gibt man dann insgesamt 4,9 g Zinkstaub in vier gleichen Portionen zu, verdünnt mit weiteren 75 ml absolutem Dioxan, erhitzt auf 100°C und hält 4 Stunden bei dieser Temperatur. Abschließend wird heiß filtriert und das Lösungsmittel im Wasserstrahlvakuum entfernt.

Man erhält 312 g des Zinkkomplexes in Form einer klar wasserlöslichen, pastösen, allmählich zu einem bei 40°C schmelzenden Feststoff erstarrenden Masse.

Nach Analyse enthält das Produkt 1,2 % Zink und 1,5 % Phosphor.

Beispiel 2

441,6 g eines Polyethers, der durch Polymerisation von Ethylenoxid in Gegenwart von Oleylalkohol hergestellt wurde und der eine mittlere Zusammensetzung entsprechend 19 Oxyethyleneinheiten pro Oleylalkohol-Endgruppe (Molekulargewicht ca. 1100, HLB 15,1) hat, und 108,0 g Stearylalkohol werden in 120 ml absolutem Dioxan gelöst und in der Kälte 44,4 g $P_4S_{10}$ zugegeben. Dann wird langsam

in einer Stunde auf 80°C hochgeheizt und bei dieser Temperatur 15 Stunden gehalten. In 15-minütigen Zeitabständen wird dann insgesamt 13,1 g Zinkstaub in 4 Portionen zugegeben, mit weiteren 120 ml absolutem Dioxan verdünnt und auf 100°C erhitzt. Bei dieser Temperatur wird 12 Stunden gehalten, danach filtriert und das Dioxan im Wasserstrahlvakuum entfernt.

Man erhält 483 g des Zinkkomplexes in Form einer klar wasserlöslichen, pastösen, allmählich zu einem bei 40 bis 43°C schmelzenden Feststoff erstarrenden Masse.

Nach Analyse enthält das Produkt 1,9 % Zink und 1,7 % Phosphor.

Beispiel 3

375,6 g eines Polyethers, der durch Polymerisation von Ethylenoxid in Gegenwart von 1-Dodecanol hergestellt wurde und der eine mittlere Zusammensetzung entsprechend 10 Oxyethyleneinheiten pro Dodecanol-Endgruppe (Molekulargewicht ca. 626, HLB 14,1) hat, 80,4 g Diethylenglykolmonoethylether (Ethylcarbitol) und 66,6 g $P_4S_{10}$ werden in 600 ml absolutem Dioxan gelöst und auf 80°C gebracht. Nach 4-stündigem Rühren bei 80°C wird in 4 Portionen insgesamt 19,6 g Zinkpulver eingetragen, wobei zum Eintragen jeweils Zeitabstände von 15 Minuten eingehalten werden. Danach heizt man auf 100°C hoch und beläßt die Mischung unter Rühren ca. 6 Stunden bei dieser Temperatur. Schließlich wird filtriert und das Dioxan im Vakuum entfernt.

Man erhält 529 g des Zinkkomplexes in Form einer hellen, mittelviskosen Flüssigkeit, die sich bereits in der Kälte klar in Wasser löst. Nach Analyse enthält das Produkt 3,2 % Zink und 3,7 % Phosphor.

Alle Produkte der Beispiele 1 bis 3 sind klar in Wasser löslich.

Anwendungsbeispiele

Die folgenden Prüfungen belegen die Verbesserung der Schmierfähigkeit der erfindungsgeäßen Zinkkomplexe als Zusätze zu HS-C Fluiden.

Beispiel 4

Eine 5 %ige wäßrige Lösung des Zinkkomplexes nach Beispiel 1 weist bei einem pH-Wert von 5,6 gegenüber Grauguß GG 20 oder Stahl ST 37 im Späne-Korrosionstest keine Korrosion auf.

An der Almen-Wieland-Prüfmaschine (M.Brunner u. R.Pedrini, Schweizer Archiv Annales Suisse, Jg. 21 (1955) Nr. 6, S. 169 - 177; Jg. 21 (1955) Nr. 8, S. 251 - 257) werden für wäßrige Lösungen desselben Produktes (Beispiel 1) die in der Tabelle 1 zusammengefaßten Werte an der Schweißgrenze erhalten.

Tabelle 1

Almen-Wieland-Test

| Gew.-% Produkt nach Beisp. 1 in Wasser | Anpreßkraft (N) | Reibungskraft (N) | Temperatur (°C) |
|---|---|---|---|
| 1 | >20 000 | 1 600 | 70 |
| 2 | >20 000 | 1 450 | 67 |
| 3 | >20 000 | 1 370 | 61 |

Beim Reichert-Reibverschleiß-Test (E.Kadmer u. H.Danniger, Schmierungstechnik Jg. 7 (1960) Nr. 5, S. 223 - 228) wurden bei Verwendung derselben Testlösungen die in der Tabelle 2 zusammengefaßten Meßergebnisse erhalten.

Tabelle 2

Reichert-Reibverschleiß-Test (bei 15 N Belastung)

| Gew.-% Produkt nach Beisp. 1 in Wasser | Spezifische Filmbelastbarkeit ($N/m^2$) |
|---|---|
| 1 | 3 306 |
| 2 | 3 826 |
| 3 | 5 454 |

Beispiel 5

Die folgende Tabelle zeigt als Vergleich das Reibverhalten von Leitungswasser und einem handelsüblichen HS-C Fluid, sowie das Reibverhalten desselben Fluids mit wachsenden Anteilen des Zinkkomplexes gemäß Beispiel 1. Die Tabelle 3 enthält die Ergebnisse des Almen-Wieland- und des Reichert-Reibverschleißtestes.

Das handelsübliche HS-C Fluid hat die folgende Zusammensetzung:

60 % Wasser,
14 % Ethylenglykol,
10 % Dipropylenglykol,
16 % Polyalkylenglykol und
10 % Korrosionsschutz-Additive.

Tabelle 3

Almen-Wieland- und Reichert-Reibverschleißtests (bei 15 N Belastung)

| Testfluid | Gew.-% Produkt n. Beisp. 1 | Anpreß-kraft (N) | Reibungs-kraft (N) | max.Temp. (°C) | Verschleiß-marke ($mm^2$) | Spez. Belast-barkeit ($N/cm^2$) |
|---|---|---|---|---|---|---|
| Wasser | - | 500 | nicht be-stimmbar | 25 | 28,1 | 1050 |
| HS-C Fluid handelsübl. | - | 20000 | 2700 | 94 | 8,5 | 3434 |
| | 1 | 20000 | 2600 | 92 | 8,0 | 3679 |
| | 2 | 20000 | 2400 | 90 | 7,3 | 4022 |
| | 5 | 20000 | 2200 | 89 | 6,4 | 4610 |

Patentansprüche

1) Zinkkomplexe der Formel

$$\left\{\left[R^1O-(CH_2-\underset{R^2}{CH}-O)_n\right]_m\left[R^3-O\right]_{(2-m)}\overset{S}{\overset{\|}{P}}-S\right\}_2 Zn$$

worin

$R^1$ und $R^3$ gleich oder verschieden sind und Alkyl, Alkenyl, Fettsäureamidyl, Acyl, Cycloalkyl, Aryl, Aralkyl oder Alkaryl bedeuten,

$R^2$ Niederalkyl bedeutet,

m eine reelle Zahl von 0,5 bis 2 bedeutet und

n eine reelle Zahl von 2 bis 100 bedeutet.

2) Zinkkomplexe der Formel

$$\left\{\left[R^4O-(CH_2-\underset{R^5}{CH}-O)_{n'}\right]_{m'}\left[R^6-O\right]_{(2-m')}\overset{S}{\overset{\|}{P}}-S\right\}_2 Zn$$

worin

$R^4$ und $R^6$ gleich oder verschieden sind und Alkyl mit 1 bis 30 Kohlenstoffatomen, Alkenyl mit 2 bis 30 Kohlenstoffatomen, Fettsäureamidyl mit 5 bis 30 Kohlenstoffatomen, Acyl mit 2 bis 30 Kohlenstoffatomen, Mono- oder Polycycloalkyl mit 4 bis 30 Kohlenstoffatomen, Aryl mit 1 bis 5 Ringen und 6 bis 30 Kohlenstoffatomen, Aralkyl mit 6 bis 14 Kohlenstoffatomen im Arylteil

und 1 bis 30 Kohlenstoffatomen im Alkylteil oder Alkaryl mit 1 bis 30 Kohlenstoffatomen im Alkylteil und 6 bis 14 Kohlenstoffatomen im Arylteil bedeuten.

3) Verfahren zur Herstellung von Zinkkomplexen, dadurch gekennzeichnet, daß man einen Polyethermonoalkohol der Formel

$$R^1O-(CH_2-\underset{R^2}{\underset{|}{CH}}-O)_nH \quad ,$$

worin

$R^1$ Alkyl, Alkenyl, Fettsäureamidyl, Acyl, Cycloalkyl, Aryl, Aralkyl oder Alkaryl bedeutet,

$R^2$ Niederalkyl bedeutet und

n eine reelle Zahl von 2 bis 100 bedeutet,

gegebenenfalls in Gegenwart eines Monoalkohols der Formel

$$R^3-OH \quad ,$$

worin

$R^3$ Alkyl, Alkenyl, Fettsäureamidyl, Acyl, Cycloalkyl, Aryl, Aralkyl oder Alkaryl bedeutet,

mit Phosphordecasulfid umsetzt, wobei ein Mengenverhältnis der Alkohole zu dem Phosphordecasulfid von 1 zu etwa 1,8 bis etwa 2,2 eingehalten wird

und dann die entstandene O,O-Dialkyl-dithiophosphorsäure mit Zink bzw. einer Zinkverbindung in einem Lösungsmittel umsetzt.

4) Verfahren nach Anspruch 3, dadurch gekennzeichnet, daß man ein Lösungsmittel verwendet, das frei von Hydroxylgruppen ist.

5) Verfahren nach den Ansprüchen 3 und 4, dadurch gekennzeichnet, daß es im Temperaturbereich von 0 bis 200°C durchgeführt wird.

6) Verfahren nach den Ansprüchen 3 bis 5, dadurch gekennzeichnet, daß man metallisches Zink einsetzt.

7) Verfahren nach den Ansprüchen 3 bis 6, dadurch gekennzeichnet, daß man pro Mol der O,O-Dialkyldithiophosphorsäure 0,4 bis 0,6 g-Atom Zink einsetzt.

8) Verschleißschutz-Additiv, enthaltend Zinkkomplexe der Formel

$$\left\{\left[R^1O-(CH_2-\underset{R^2}{\underset{|}{CH}}-O)_n\right]_m \left[R^3-O\right]_{(2-m)} \overset{S}{\overset{\|}{P}}-S\right\}_2 Zn \quad ,$$

worin

$R^1$ und $R^3$ gleich oder verschieden sind und Alkyl, Alkenyl, Fettsäureamidyl, Acyl, Cycloalkyl, Aryl, Aralkyl oder Alkaryl bedeuten,

$R^2$ Niederalkyl bedeutet,

m eine reelle Zahl von 0,5 bis 2 bedeutet und

n eine reelle Zahl von 2 bis 100 bedeutet.

9) Verwendung von Zinkkomplexen der Formel

$$\left\{\left[R^1O-(CH_2-\underset{R^2}{\underset{|}{CH}}-O)_n\right]_m \left[R^3-O\right]_{(2-m)} \overset{S}{\overset{\|}{P}}-S\right\}_2 Zn \quad ,$$

worin

$R^1$ und $R^3$ gleich oder verschieden sind und Alkyl, Alkenyl, Fettsäureamidyl, Acyl, Cycloalkyl, Aryl, Aralkyl oder Alkaryl bedeuten,

$R^2$ Niederalkyl bedeutet,

m eine reelle Zahl von 0,5 bis 2 bedeutet und

n eine reelle Zahl von 2 bis 100 bedeutet;

als Verschleißschutz-Additiv.

10) Verwendung von Zinkkomplexen nach Anspruch 9 in HS-C Fluiden.

Europäisches Patentamt

# EUROPÄISCHER RECHERCHENBERICHT

0054804

Nummer der Anmeldung

EP 81 11 0175.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 044 032 (M.A. WILEY et al.)<br>* Ansprüche; Spalte 1, Zeilen 50 bis 60; Beispiel 1 *<br>-- | 1-5, 8-10 |
| P,X | US - A - 4 259 192 (J.E. LILBURN)<br>* Spalte 2, Zeile 45; Beispiele 1 bis 3 *<br>-- | 1,3-5 |
| X | US - A - 2 680 123 (P.K. MULVANY)<br>* Beispiele 1, 2 *<br>-- | 1 |
| A | DE - C - 1 119 854 (ESSO RESEARCH AND ENGINEERING)<br>* Anspruch 1 *<br>-- | 3 |
| A | DE - A1 - 2 802 756 (CIBA-GEIGY AG)<br>* Anspruch 1; Beispiel 66 *<br>-- | |
| A | US - A - 3 337 654 (H.A. CYBA)<br>-- | |
| A | US - A - 3 828 084 (H. KAPLAN et al.)<br>* Ansprüche 1, 2; Tabelle 2 *<br>---- | |

KLASSIFIKATION DER ANMELDUNG (Int. Cl.)

C 08 G 65/32
C 07 F 9/165
C 10 M 3/42

RECHERCHIERTE SACHGEBIETE (Int. Cl.)

C 07 F 3/06
C 07 F 9/165
C 08 G 65/32
C 08 G 65/48
C 10 M 3/40
C 10 M 3/42
C 10 M 3/48

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-03-1982 | WIBMER |